(19) Europäisches Patentamt
European Patent Office
Office européen des brevets

(11) Publication number: **0 013 807**
**B1**

(12) # EUROPEAN PATENT SPECIFICATION

(45) Date of publication of patent specification: **05.10.83**

(51) Int. Cl.³: **C 07 C 143/28,** C 07 C 139/00, C 10 M 1/40

(21) Application number: **79302823.4**

(22) Date of filing: **07.12.79**

(54) **A process for the production of basic magnesium sulphonates.**

(30) Priority: **13.12.78 GB 4832278**

(43) Date of publication of application: **06.08.80 Bulletin 80/16**

(45) Publication of the grant of the patent: **05.10.83 Bulletin 83/40**

(84) Designated Contracting States: **BE DE FR GB IT NL**

(56) References cited:
**EP - A - 0 013 808**
**EP - A - 0 015 341**
**US - A - 3 250 710**
**US - A - 4 129 589**

(73) Proprietor: **Exxon Research and Engineering Company**
**P.O.Box 390 180 Park Avenue**
**Florham Park New Jersey 07932 (US)**

(72) Inventor: **Marsh, John Frederick**
**1 Valley Close**
**Goring on Thames, Oxfordshire (GB)**
Inventor: **Sexton, Michael Douglas**
**15 Fleet Way**
**Lower Broadway Didcot, Oxfordshire (GB)**
Inventor: **Cleverley, John Arthur**
**Simla 39 Warner Crescent**
**Didcot, Oxfordshire (GB)**
Inventor: **Simpkin, Dennis John**
**14 Bryan Way**
**Wantage, Oxfordshire (GB)**
Inventor: **Scattergood, Roger**
**Challow Cottage 17 Beech Hill Road**
**Spencers Wood Reading Berkshire (GB)**

(74) Representative: **Bawden, Peter Charles**
**Esso Chemical Research Centre PO Box 1**
**Abingdon**
**Oxfordshire OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 013 807 B1

Courier Press, Leamington Spa, England

A process for the production of basic magnesium sulphonates

The present invention relates to the production of highly basic magnesium sulphonates. The magnesium sulphonates produced by the present invention are particularly useful as additives for lubricating oils and the present invention also provides lubricating oils containing these magnesium sulphonates. The term basic magnesium sulphonate is used to describe materials containing a stoicheiometric excess of magnesium compared to that required to neutralize the sulphonic acid.

Basic alkaline earth metal sulphonates are well known as is their use as additives for lubricants. Barium, Calcium and Magnesium Sulphonates, have been used and many methods have been proposed for their production the preferred techniques being the carbonation of an oil solution of a reaction mixture containing a sulphonic acid or sulphonate, an excess of a compound of the alkaline earth metal generally the alkoxide, oxide or hydroxide, usually a hydrocarbon solvent in the presence of reaction promoter systems often comprising an alcohol and/or water sometimes together with a copromoter.

It is important that where the highly basic sulphonates are to be used as additives for lubricating oils they be not too viscous, are free of sediment, are soluble in the oil and do not cause the lubricating oil to be hazy. It is also preferred that they have as high a Total Base Number (TBN), being the number of milligrams of KOH equivalent to 1 gram of the product when titrated with strong acid, since this results in the most economic use of the metal. It is also important that the compound perform well as an additive in oil in use in an engine.

It is well known that different reaction conditions and promoter systems are suitable for different alkaline earth metals as is shown by United States Patent 3250710 which is primarily concerned with using a particular promoter in the production of relatively low base number calcium sulphonates. It is also known that the production of basic magnesium sulphonates presents greater difficulties than producing Barium and Calcium sulphonates and many of the first techniques proposed for producing magnesium sulphonates required magnesium metal as starting material, as for example in United States Patent 3158009. Since then various reaction promoter systems have been proposed for the production of basic magnesium sulphonates from magnesium oxide. For example, U.K. Patent 1166744 is concerned with the use of mixtures of alcohol, water and amines as promoters; U.K. Patent 1297150 describes the use of oil soluble carboxylic acids and water whilst U.K. Patent 1399092 relates to the use of amine salts of carboxylic acids, alcohol and water and United States Patent 4129589 uses low molecular weight carboxylic acids.

We have now discovered a new promoter system which is effective either as sole promoter or together with other promoters in the production of a highly basic magnesium sulphonates from magnesium oxide.

The present invention therefore provides a process for the production of highly basic magnesium sulphonates comprising carbonating a mixture containing:

(a) an oil soluble sulphonate or sulphonic acid
(b) a stoicheiometric excess of magnesium oxide above that required to react with (a).
(c) a hydrocarbon solvent.
(d) an alcohol containing less than 4 carbon atoms and
(e) a $C_4$ to $C_6$ diketone.

The sulphonate or sulphonic acid used in the process of this invention may be natural or synthetic, the synthetic alkylaryl sulphonates and sulphonic acids being preferred.

The basic magnesium sulphonates with which this invention is concerned consist of an oil solution of the magnesium sulphonate which itself acts as a surfactant to disperse the excess magnesium which is present as colloidal magnesium derivatives such as carbonate, oxide and hydroxide. Thus it is important that the sulphonate or sulphonic acid be oil soluble.

The excess of magnesium compound provides the basicity of the compound and the amount that should be used depends upon its quality and the desired TBN of the product. The excess may be achieved by starting with the sulphonic acid and adding an amount necessary to give the required excess after reaction with the acid or by starting with the magnesium sulphonate and then adding the required excess. We prefer to use from 1 to 45 more preferably 1 to 25 equivalents of magnesium for each equivalent of sulphonic acid present in the reaction mixture, this would include magnesium present if a sulphonate is used as the starting material in which case the equivalents of sulphonic acid from which the sulphonate is derived would be number of equivalents of acid.

The hydrocarbon solvent is used in an amount sufficient to keep the reaction mixture fluid during carbonation and may be aliphatic such as hexane or heptane or aromatic such as benzene, toluene or xylene, toluene being the preferred solvent. We find that 5 parts by weight of hydrocarbon solvent per part of magnesium oxide is particularly suitable.

We have found that the presence of a $C_4$ to $C_6$ diketone is essential to the production of satisfactory basic magnesium sulphonates by the process of our invention. Without the diketone virtually none of the excess of the magnesium oxide is converted to the metal carbonate and it remains as the insoluble metal compound giving high sediment, poor filterability and low TBN. The diketone is preferably water miscible and acetyl acetone is our preferred diketone although 2,3 butane dione and

hexyl diketones may be used. The amount of the diketone that should be used depends upon the nature of the magnesium oxide, its quality and the TBN required. We prefer to use from 0.02 to 1.5 parts by weight based on the total amount of magnesium oxide present particularly when acetyl acetone is used.

Whilst we have found that basic magnesium sulphonates may be obtained by carbonating the four component mixture described above. We have found that higher base numbers products with improved oil solubility, improved filterability and lower viscosities may be obtained if other components or combinations of components are included in the reaction mixture.

We have found for example, that particular good products are obtained if water is added to the reaction mixture. The amount of water that should be added will depend upon the amount of excess magnesium oxide present. We prefer to use from 0 to 2 more preferably 0.5 to 2 parts by weight of water based on the total amount of magnesium oxide.

We have also found that the presence of the alcohol in addition to the $C_4$ to $C_6$ diketone in the reaction mixture improves both the product and the reaction enhancing the formation of the basic colloidal magnesium sulphonate. Where water is added to the reaction mixture, we prefer the alcohol contain less than 3 carbon atoms the preferred alcohols being ethanol and methanol, methanol being most preferred. As with the other ingredients the amount of the alcohol that should be used depends upon the amounts of the other ingredients, especially the amount of the excess of the magnesium oxide, we prefer to use from 0.5 to 2 by weight of the alcohol based on the total weight of the magnesium oxide.

We have also found that the diketone may be used together with other promoters previously proposed for the production of basic magnesium sulphonates. For example, it may be used together with amines such as ethylene diamine and with the oil soluble carboxylic acids, such as those proposed in U.K. Patent 1297150 as well as oil insoluble carboxylic acids, such as formic acid and acetic acid. Equally the diketone may be used together with halide containing promoters such as ammonium or magnesium chloride.

The addition of an oil soluble alkyl phenol to the reaction mixture is also useful in that it can give rise to products of improved viscosity. The alkyl phenols may be simple phenols, such as nonyl phenol, decyl and dodecyl phenol bridged phenols of the general formula:

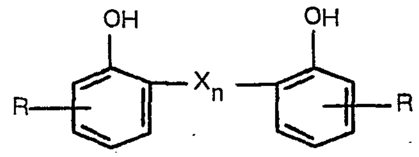

Where R is an alkyl group containing at least 8 carbon atoms, X is sulphur or $(CH_2)$ and n is 1 or 2. The amount of the phenol that should be incorporated depends upon the nature of the other ingredients, but we prefer to use form 0 to 1 parts by weight based on the total weight of magnesium oxide present in the reaction mixture.

It should be appreciated that within the ranges of amounts specified above the preferred amounts of materials to be used will depend upon the relative proportions of all the various components in the reaction mixture.

Carbonate content of the final product can be controlled by stopping carbonation of the reaction mixture at any particular moment alternatively carbonation may be continued until there is no further significant uptake of carbon dioxide. The temperature of carbonation is not critical. The minimum temperature that may be used is that at which the reaction mixture remains fluid and the maximum is the decomposition temperature of the component with the lowest decomposition temperature. We prefer to carry out the carbonation at the reflux temperature which depends upon the components of the reaction mixture and the pressure. Generally carbonation is effected at a temperature in the range 25°—200° preferably 50—150°C. The use of the diketone as reaction promoter is equally applicable to processes involving more than one carbonation stage and in which various components of the reaction mixture are added or removed between carbonation stages. We have found that staged addition of magnesium oxide and water where used can lead to further increase in the basicity of the product.

After carbonation the product is stripped to remove the volatile materials such as alcohol, water, diketone and solvent and the remaining solids in the reaction mixture are removed preferably by filtration or centrifugation. The product may be stripped first and then filtered or vice versa. Further carbon dioxide may be passed through the reaction mixture during stripping. The final product is thus obtained as an oil solution of the basic magnesium sulphonate.

The basic magnesium sulphonates obtained from the process of the present invention are useful as additives for lubricants where their basicity neutralises acids formed by the operation of the engine and the surfactant part of the compund helps disperse unwanted residues in the oil to reduce the formation of harmful deposits. The magnesium sulphonate also enhances the antirust properties of the

lubricant. The amount of the sulphonate that should be included in the oil depends upon the type of oil concerned and its application. For crankcase oils, we prefer to use from 0.01% to 5 wt.% based on the weight of the oil.

The basic magnesium sulphonates of this invention may be used in a wide variety of lubricating oils. The oils may be natural or synthetic or mixtures thereof and the main uses are in crankcase lubricants, two cycle and aviation lubricants.

The sulphonates may be used in combination with other conventional additives for lubricating oils such as for example other highly basic metal additives particularly othe alkaline earth metal sulphonates and alkaline earth metal phenates and sulphurised phenates. In addition the oils may contain ashless dispersants such as the products obtained by the reaction of polyamines or polyols with polyisobutylene succinic anhydride and anti-oxidants, antiwear agents and anti corrosion additives such as the well known zinc dialkyldithiphosphates. The oils may also contain viscosity index modifiers such as the well known olefine copolymers.

The present invention is illustrated but in no way limited by reference to the following examples in which a reaction mixture was prepared at room temperature in a flask fitted with a reflux condenser. Carbon dioxide was introduced into the reaction mixture and the temperature of the mixture allowed to rise to the reflux temperature where carbonation was continued for 2 hours with the carbon dioxide being introduced at 384 cc's/minute. After the desired amount of carbon dioxide had been introduced carbonation was stopped and the temperature of the mixture raised to 150°C and vacuum stripped to remove volatile materials after which the mixture was cooled and filtered at 150°C to yield an oil solution of the required basic magnesium sulphonate.

Example 1

This Example used 81.6 grams of a 90 wt.% active ingredient oil solution of a $C_{24}$ branched chain alkyl benzene sulphonic acid, and the magnesium oxide was a 92½% active commercially available Magnesium oxide sold under the name "Taycrest M". Oil 1 was a paraffinic material oil of viscosity 90 centistokes at 100°F whilst Oil 2 was another paraffinic mineral oil but of viscosity 150 centistokes at 100°F. 256 grams of Toluene were used as solvent.

The quantities of other materials and reaction conditions are given in the following Table 1.

TABLE 1

| Run No: | 1 | 2 | 3 | 4 | 5 | 6 | 7 | 8 | 9 | 10 | 11 | 12 |
|---|---|---|---|---|---|---|---|---|---|---|---|---|
| Ingredients (grams) | | | | | | | | | | | | |
| Magnesium Oxide | 49.0 | 49.0 | 49.0 | 49.0 | 49.0 | 51.1 | 49.0 | 49.0 | 49.0 | 48.5 | 49.0 | 49.0 |
| Alcohol | 15.0 | 15.0 | 15.0 | 15.0 | 35 | 35 | 70 | 70 | 15 | 35 | 15 | |
| Water | 45 | 25 | 25 | 90 | 45 | 45 | 25 | 90 | 25 | 45 | 90 | 45 |
| Oil Type | 1 | 1 | 1 | 1 | 1 | 1 | 1 | 1 | 1 | 1 | 1 | 1 |
| Amount | 114 | 114 | 114 | 114 | 114 | 124.3 | 114 | 114 | 114 | 116.3 | 114 | 114 |
| Nonyl Phenol | 25 | 25 | 25 | 25 | 25 | — | 25 | 25 | 25 | 0 | 25 | 25 |
| Acetyl Acetonate | 8.4 | 12.6 | 16.8 | 8.0 | 8.0 | None | 8.0 | 8.0 | 8.0 | 8.0 | 8.0 | 8.0 |
| Co-Promoter | — | — | — | — | — | — | — | — | — | — | | Ethylene diamine |
| (Amount) | | | | | | | | | | | | 5.0 |
| TBN mg KOH $g^{-1}$ | 260 | 230 | 220 | 280 | 252 | 14 | 233 | 245 | 286 | 396 | 29 | 155 |

TABLE 1 (Continued)

| Run No: | 13 | 14 | 15 | 16 | 17 | 18 | 19 | 20 | 21* | 22 | 23 | 24 |
|---|---|---|---|---|---|---|---|---|---|---|---|---|
| Ingredients (grams) | | | | | | | | | | | | |
| Magnesium Oxide | 49.0 | 49.0 | 49.0 | 49.0 | 49.0 | 49.0 | 49.0 | 49.0 | 51.1 | 49.0 | 51.1 | 51.1 |
| Alcohol | 35 | 35 | 35 | 35 | 35 | 35 | 35 | 35 | 35 | 35 | 35 | 35 |
| Water | 45 | 45 | 45 | 45 | 45 | 45 | 45 | 45 | 45 | 45 | 45 | 45 |
| Oil Type | 1 | 1 | 1 | 1 | 1 | 1 | 1 | 1 | 2 | 1 | 1 | 1 |
| Amount | 114 | 105 | 104 | 110 | 106 | 85 | 85 | 104 | 108 | 116 | 108.3 | 115.3 |
| Nonyl Phenol | 25 | 25 | 25 | 25 | 25 | 25 | | 25 | | 25 | | |
| Acetyl Acetone | 8.0 | 16.7 | 8.0 | 8.0 | 8.0 | 8.0 | 8.0 | 8.0 | 8.0 | NONE | 8.0 | 8.0 |
| Co-Promoter | Ethylene diamine | Ethylene diamine | Ethanolamine | $NH_4OH$ | $NH_4Cl$ | n-decanoic acid | n-decanoic acid | Acetic Acid | Acetic Acid | Formic Acid | Formic Acid | Formic Acid |
| (Amount) | 5.0 | 5.0 | 9.8 | 4 | 8.6 | 28.7 | 28.7 | 10.0 | 10.0 | 8.6 | 8.0 | 1.0 |
| TBN mg KOH $g^{-1}$ | 410 | 398 | Gel | 192 | 237 | 370 | 373 | 247 | 360 | 48 | 392 | 399 |

* In Run 21 the carbon dioxide was introduced for 6 hours at 92 cc's/minutes

In all but Run 11 the alcohol was methanol, methoxy ethanol being used in Run 11.

Example 2

The process of Example 1 using the same sulphonic acid was repeated except that the carbonation was carried out at 55°C and different grades of magnesium oxide were used.

Table 2 which sets out the quantities of materials used and the reaction conditions magnesium oxide (a) was more than 99% pure supplied by Johnson & Matthey whilst (b) was obtained by roasting basic light magnesium carbonate for 2 hours at 650°C otherwise the magnesium oxide used was that of Example 1. 45 grams of water, 35 parts of methanol, and 256 grams of toluene were used, the oil was type 2 and the promoter system consisted of 8.0 grams of formic acid and 8.0 grams of Acetyl Acetone. Carbonation was continued for 6 hours at 92 cc's of $CO_2$ per minute.

TABLE 2

| Run No: | 25 | 26 | 27 | 28 |
|---|---|---|---|---|
| Ingredients (grams) | | | | |
| Magnesium Oxide | 51.1 | 50 (a) | 47.7 (b) | 47.7 (b) |
| Alcohol | 35 | 35 | 35 | 35 |
| Oil | 108 | 108 | 108 | 83 |
| Nonyl Phenol | — | — | — | 25 |
| TBN mg KOH $g^{-1}$ | 402 | 405 | 384 | 362 |

Example 3

In this Example, the sulphonic acid was replaced by 163 grams of 46% active ingredient solution of neutral magnesium sulphonate and the methanol was replaced by acetone with the following results:

TABLE 3

| Run No: | 29 | 30 | 31 | 32 |
|---|---|---|---|---|
| Magnesium Oxide | 53.4 | 44.3 * | 53.4 | 53.4 |
| Acetone | 39.6 | 35 | 39.6 | 39.6 |
| Solvent | Toluene | N-Heptane | Xylene | N-Heptane |
| | 256 | 205.6 | 260 | 205.6 |
| Water | 50.9 | 45 | 50.9 | 50.9 |
| Oil 1 | 45.8 | 45.8 | 45.8 | 53.8 |
| Acetyl Acetone | 8.4 | 8.4 | 8.4 | 8.4 |
| Co-Promoter | Formic Acid | Formic Acid | Formic Acid | — |
| | 8.0 | 8.0 | 8.0 | |
| $CO_2$ Rate cc's/Minute | 92 | 92 | 92 | 200 cc's/ minute |
| $CO_2$ Time (hours) | 3 | $4\frac{1}{2}$ | 3 | 2 |
| TBN mg KOH $g^{-1}$ | 330 | 315 | 248 | 220 |
| | 33 | | 34 | |
| Magnesium Oxide | 47.2 | | 47.2 | |
| Acetone | 35 | | 35 | |
| Solvent | N-Heptane | | Hexane | |
| | 205.6 | | 198.1 | |
| Water | 45 | | 45 | |
| Oil 1 | 48.5 | | 40.8 | |
| Acetyl Acetone | 8.4 | | 8.4 | |
| Co-Promoter | Ethylene Diamine | | Formic Acid | |
| | 5.0 | | 8.0 | |
| $CO_2$ Rate cc's rate | 384 | | 200 | |
| $CO_2$ Time (hours) | 2 | | 2 | |
| TBN mg KOH $g^{-1}$ | 120 | | 333 | |

* The 99% pure magnesium oxide used in Example 2

Example 4

Various reaction mixtures comprising:
25 grams of Magnesium Oxide
117 grams of a 70% active ingredient solution of a $C_{24}$ alkyl benzene sulphonic acid
25 grams of Nonyl Phenol
55 grams of Dodecyl Benzene
200 ccs Toluene
50 ccs Methanol

and differing amounts of ammonium chloride as copromoter were heated for 1 hour and then 32 cc's of Acetyl Acetone added and the mixture carbonated for 11 hours at the reflux temperature and at a rate of 60 cc's of carbon dioxide/minute to give the following products:

| Amount $NH_4CL$ (grams) | TBN | Kinematic Viscosity cc at 210°F |
|---|---|---|
| 3.4 | 317 | Grease |
| 1.7 | 316 | Grease |
| 0.8 | 335 | 520 |
| 0.6 | 325 | 172 |
| 0.4 | 330 | 192 |
| 0 | 128 | 51 |

Example 5

The process of Example 4 was repeated replacing the ammonium chloride with magnesium acetate (Mg $CH_3COO)_2$ $2H_2O$ and increasing the carbonation time to 12 hours.

| Amount $Mg(CH_3COO)_2$ $2H_2O$ Grams | TBN | KV CS at 210°F |
|---|---|---|
| 2.7 | 319 | 148 |
| 1.3 | 332 | 363 |
| 0.6 | 331 | 323 |

Example 6

Various mixtures comprising:
25 grams of Magnesium oxide
75 grams of the sulphonic Acid solution used in Example 1
55 grams of a Paraffinic Mineral oil
0.4 grams of Ammonium Chloride
200 ccs Toluene
32 ccs Acetyl Acetone

and various amounts of different alcohols were carbonated for 9 hours at a rate of 60 cc's of carbon dioxide to give the following products.

| Alcohol | Quantity (Grams) | TBN |
|---|---|---|
| Ethanol | 57 | 318 |
| n-Propanol | 75 | 282 |
| 2-Methoxyethanol | 115 | 317 |
| n-Hexanol | 128 | 261 |

Example 7

For the sake of comparison the process of Example 4 containing 3.4 grams of ammonium chloride was repeated without any acetyl acetone and the TBN of the product was 95.

Example 8

Various reaction mixtures containing:
25 grams Magnesium Oxide
52 grams of a Paraffinic Mineral Oil
75 grams of the Sulphonic acid solution used in Example 4
and differing quantities of Toluene Methanol and Acetyl Acetone were prepared and carbonated for 14 hours at a carbon dioxide rate of 60 cc's per minute. The results were as follows:

| | | | | | | | |
|---|---|---|---|---|---|---|---|
| Toluene (grams) | 170 | 170 | 170 | 170 | 170 | 0 | 170 |
| Methanol (grams) | 40 | 40 | 40 | 0 | 80 | 40 | 80 |
| Acetyl Acetone (grams) | 15.6 | 7.8 | 3.4 | 15.6 | 15.6 | 15.6 | 31.3 |
| TBN | 209 | 153 | 135 | 117 | 138 | 204 | 282 |
| Filtration | Bad | Poor | Good | Good | Good | Poor | Good |

Example 9

This Example used 81.6 grams of the 90 wt.% active ingredient oil solution of the sulphonic used in Example 1, 51.1 grams of the Magnesium Oxide used in Example 1, 35.0 wt.% methanol, 8.0 grams of formic acid, 45.0 grams of water and 256 grams of Toluene were carbonated for 3 hours at a rate of 137 cc's of $CO_2$ per minute.

The quantities of the other materials and the TBN of the products are given in the following Table 4.

TABLE 4

| Run No: | 35 | 36 | 37 |
|---|---|---|---|
| Oil grams | 107 | 104.6 | 116.3 |
| Diacetyl grams | 7.1 | — | — |
| Acetyl Acetone | — | 9.5 | — |
| TBN | 220 | 278 | 10 |

Example 10

A mixture of 81.6 grams of the sulphonic acid used in Example 1, 25.6 of magnesium oxide, 256 grams of toluene, 35.0 grams of methanol was stirred and heated to 60°C for 30 minutes. 8.0 grams of Acetyl Acetone, 8.0 grams of formic acid and 45.0 grams of water were then added. The mixture was carbonated until saturated with $CO_2$ (after 25 minutes). An additional 25.5 grams of magnesium oxide was then added and carbonation contained for a further 58 minutes.

28 grams of carbon dioxide were absorbed, the product was then filtered and the volatile solvents removed by distillation and vacuum stripping at 160°C and 20 millimetres of mercury pressure.

The product had a TBN of 396 mg KOH/gram.

Example 11

The process of Example 10 was repeated except that only half the quantity of water was used in the initial mixture and the extra water added with the second charge of magnesium oxide.

The product had a TBN of 394 mg KOH/gram.

Example 12

The mixture of 98 grams of the oil solution of sulfonic acid used in Example 1, 108 grams of a paraffinic mineral oil, 3.8 magnesium oxide, 48 grams of methanol and 200 grams of xylene was formed, stirred and heated to 70°C for one hour. A further 48 grams of magnesium oxide, 8 grams of acetyl acetone and 20.5 grams of water were then added and the distillation continued. This mixture

was carbonated for 2.5 hours at a rate of 160 cc's/minute.

After distilling to 90°C to remove the methanol a further 20 grams of water were added and distillation continued. The mixture was then carbonated for a further 2 hours at 160 cc's/minute at 80°C. The volatile solvents were removed by vacuum distillation to 140°C at 50 millimetres mercury pressure. Toluene was added and the product filtered and the toluene removed.

The TBN of the product was 300 mg KOH/grams.

**Claims**

1. A process for the production of highly basic magnesium sulphonates comprising carbonating a mixture containing
(a) an oil soluble sulphonate or sulphonic acid
(b) a stoicheiometric excess of magnesium oxide above that required to react with (a)
(c) a hydrocarbon solvent
(d) an alcohol containing less than 4 carbon atoms and
(e) a $C_4$ to $C_6$ diketone

2. A process according to claim 1 in which from 0.5 to 2 parts by weight of water based on the total amount of the alkaline earth metal compound are also included.

3. A process according to claim 1 or claim 2 in which the alcohol is methanol.

**Patentansprüche**

1. Verfahren zur Herstellung von hochbasischen Magnesiumsulfonaten, bei dem ein Gemisch, enthaltend
(a) ein öllösliches Sulfonat oder Sulfonsäure,
(b) Magnesiumoxid im stoechiometrischen Übershuß zu der zur Umsetzung mit (a) erforderlichen Menge,
(c) ein Kohlenwasserstofflösungsmittel,
(d) einem weniger als 4 Kohlenstoffatome enthaltenden Alkohol und
(e) ein $C_4$—$C_6$-Diketon
karbonisiert wird.

2. Verfahren nach Anspruch 1, dadurch gekennzeichnet, daß auch 0,5 bis 2 Gewichtsteile Wasser, bezogen auf die Gesamtmenge der Erdalkalimetall-Verbindung enthalten sind.

3. Verfahren nach Anspruch 1 oder 2, dadurch gekennzeichnet, daß der Alkohol Methanol ist.

**Revendications**

1. Procédé de production de sulfonates de magnésium fortement basiques, comprenant la carbonatation d'un mélange renfermant
(a) un sulfonate ou un acide sulfonique soluble dans l'huile
(b) un excès stoechiométrique d'oxyde de magnésium par rapport à la quantité nécessaire pour réagir avec (a)
(c) un solvant hydrocarboné
(d) un alcool contenant moins de 4 atomes de carbone et
(e) une dicétone en $C_4$ à $C_6$.

2. Procédé suivant la revendication 1, dans lequel on utilise également 0,5 à 2 parties en poids d'eau sur la base de la quantité totale de composé de métal alcalino-terreux.

3. Procédé suivant la revendication 1 ou la revendication 2, dans lequel l'alcool est le méthanol.